# FASCICULE DE BREVET EUROPEEN

(11) **EP 2 434 280 B1**
(45) Date de publication et mention de la délivrance du brevet: **07.12.2016**
(21) Numéro de dépôt: 11182121.1
(22) Date de dépôt: 21.09.2011
(51) Int. Cl.: G01N 27/90

(54) **Contrôle non destructif d'une structure dans un aéronef**
Zerstörungsfreie Prüfung einer Struktur in einem Flugzeug
Non-destructive testing of an aircraft structure

(30) Priorité: 23.09.2010 FR 1057643
(43) Date de publication de la demande: 28.03.2012
(73) Titulaire: Airbus Operations (Société par actions simplifiée), 31060 Toulouse (FR)
(72) Inventeur: De Smet, Marie-Anne, 32600 MONBRUN (FR)
(74) Mandataire: Augarde, Eric

(56) Documents cités:
- GB-A- 2 401 947
- US-A1- 2006 186 880
- US-B1- 7 250 757
- THEODOULIDIS T ET AL: "Interaction of an Eddy-Current Coil With a Right-Angled Conductive Wedge", IEEE TRANSACTIONS ON MAGNETICS, IEEE SERVICE CENTER, NEW YORK, NY, US, vol. 46, no. 4, 1 avril 2010 (2010-04-01), pages 1034-1042, XP011297661, ISSN: 0018-9464

## Description

### DOMAINE TECHNIQUE

La présente invention concerne le domaine des techniques de contrôle non destructif pour détecter des défauts dans des structures métalliques, et plus particulièrement, pour la détection de fissures dans des zones non accessibles ou difficilement accessibles de la structure d'un aéronef.

### ÉTAT DE LA TECHNIQUE ANTÉRIEURE

Les structures ou pièces mécaniques des aéronefs font l'objet de contrôles réguliers pour détecter notamment la présence éventuelle de fissures afin de procéder, si nécessaire, aux réparations appropriées.

On connaît déjà notamment par la demande de brevet EP2037261, un système de contrôle non destructif comportant une sonde constituée d'une pluralité de bobines fixées sur la surface à contrôler. Des sous-ensembles de ces bobines sont séquentiellement alimentés et connectés en série pour simuler un balayage continue de la surface à inspecter par une sonde. L'initialisation des bobines est réalisée dans l'air avant leur installation sur la surface et les signaux issus des sous-ensembles de bobines sont comparés entre eux pour détecter les fissures superficielles dans la structure.

Cependant, ce système peut aussi déclencher des alertes qui ne correspondent pas forcément à des fissures. En effet, des parasites électromagnétiques et/ou des changements de températures et/ou des modifications de propriétés mécaniques de la structure (par exemple, un durcissement de la matière) peuvent perturber la circulation des courants de Foucault, et engendrent une variation d'impédance aux niveaux des bobines.

L'objet de la présente invention est de proposer un procédé de contrôle non destructif par courants de Foucault pour détecter d'éventuels défauts dans une structure métallique remédiant aux inconvénients précités, en particulier en permettant de détecter les fissures sans être perturbé par des facteurs extérieurs ou une évolution naturelle de la structure.

### EXPOSÉ DE L'INVENTION

L'invention a pour objet un procédé de contrôle non destructif par courants de Foucault pour détecter des défauts dans une structure métallique au moyen d'un réseau de bobines fixé sur une surface de ladite structure, comprenant une activation des bobines, et une mesure des signaux électriques représentatifs des courants de Foucault, ledit procédé comportant en outre une évaluation dans le temps d'une variation du signal électrique de chacune des bobines en prenant comme référence un effet de bord correspondant à un signal électrique spécifique issu d'au moins une bobine installée en bordure de la surface, le niveau de ladite variation étant indicatif de la présence des défauts dans la structure.

Ainsi, le procédé selon l'invention permet d'avoir une détection automatique, précise, et robuste des défauts dans des zones où il n'y a pas d'accès direct tout en évitant les fausses alarmes.

Avantageusement, le procédé comporte une étape pour comparer entre eux les signaux électriques spécifiques des bobines installées en bordure de la surface.

Ceci permet de croiser les résultats précédents pour être encore plus sûr de ne pas avoir un faux diagnostic.

Selon une particularité avantageuse de la présente invention, le procédé comporte en outre les étapes suivantes :
- déterminer une cartographie spatiale en établissant une correspondance entre les niveaux de signaux électriques des bobines par rapport à l'effet de bord dans le plan d'impédance et la répartition spatiale desdites bobines sur ladite surface, et
- visualiser ladite cartographie spatiale.

Ceci permet de directement localiser la position de toute bobine indiquant la présence d'un défaut.

Avantageusement, le procédé comporte les étapes suivantes :
- assembler chacune des bobines dudit réseau de bobines à la surface de ladite structure au moyen d'un matériau flexible ayant un pouvoir adhérant,
- couvrir le réseau de bobines au moyen dudit matériau flexible, et
- maintenir le réseau de bobines en contact sur ladite surface au moyen dudit matériau flexible.

Ceci permet une adaptation parfaite des bobines sur toute forme géométrique de la surface, un meilleur contact, et une meilleure protection du réseau.

Selon un aspect de l'invention, le procédé comporte une analyse des signaux électriques issus des bobines par rapport à des seuils de détection déterminés en fonction des positions desdites bobines sur la surface.

Ces seuils de détection de fissures permettent de constater de manière rapide et efficace si les niveaux de signaux électriques des bobines sont acceptables ou pas pour la structure.

Avantageusement, le procédé comporte une calibration dudit réseau de bobines à des intervalles déterminés dans le temps pour analyser l'évolution sur la surface de ladite structure.

Ceci permet de diagnostiquer efficacement et à tout moment l'opérationnalité de chaque bobine.

Avantageusement, le procédé comporte un écartement du signal électrique de toute bobine présentant une anomalie.

Ceci permet de réaliser la détection même si une ou plusieurs bobine(s) est(sont) défectueuse(s).

Selon un autre aspect de l'invention, le procédé comporte les étapes suivantes :
- déterminer les phases desdits signaux électriques issus des bobines en prenant comme référence l'effet de bord, et
- analyser les déphasages desdits signaux électriques par rapport à une phase de référence correspondant à des courants de Foucault surfaciques.

Ceci permet de détecter les défauts en profondeur en plus des fissures superficielles.

L'invention vise aussi un dispositif de contrôle non destructif par courants de Foucault pour détecter des défauts dans une structure métallique au moyen d'un réseau de bobines fixé sur une surface de ladite structure, comprenant des moyens d'activation pour activer les bobines, des moyens de mesure pour mesurer des signaux électriques représentatifs des courants de Foucault, et des moyens de traitement de donnée pour évaluer dans le temps une variation du signal électrique de chacune des bobines en prenant comme référence un effet de bord correspondant à un signal électrique spécifique issu d'au moins une bobine installée en bordure de la surface, le niveau de ladite variation étant indicatif de la présence des défauts dans la structure.

L'invention vise également un aéronef comportant une structure métallique et un dispositif de contrôle de la structure mettant en oeuvre le procédé selon l'une quelconque des caractéristiques ci-dessus.

### BRÈVE DESCRIPTION DES DESSINS

D'autres caractéristiques et avantages de l'invention apparaîtront à la lecture de modes de réalisation préférentiels de l'invention faits en référence aux figures jointes parmi lesquelles :
Les Figs. 1A et 1B illustrent de manière schématique un dispositif pouvant être utilisé pour réaliser le procédé de contrôle non destructif par courants de Foucault pour détecter des défauts dans une structure métallique d'un aéronef, selon l'invention ;
La Fig. 2 représente un exemple d'un diagramme usuel de l'impédance d'une bobine du dispositif de la Fig. 1, dans le plan d'impédance ;
Les Figs. 3A et 3B représentent la distribution des impédances normalisées issus des bobines en fonction de leur position sur la structure de l'aéronef ;
Les Figs. 4A-4C représentent un seuil de détection dans le plan d'impédance qui peut être utilisé pour diagnostiquer la présence des défauts dans la structure de l'aéronef ;
La Fig. 5 représente un exemple de détection des défauts en profondeur de la structure de l'aéronef ;
La Fig. 6 représente un organigramme illustrant les différentes étapes de l'installation du réseau de bobines sur la structure de l'aéronef selon l'invention ; et
La Fig. 7 représente un organigramme illustrant les différentes étapes du procédé de détection de défaut dans la structure de l'aéronef selon un mode de réalisation particulier de l'invention.

### EXPOSÉ DÉTAILLÉ DE MODES DE RÉALISATION PARTICULIERS

L'invention concerne la détection des défauts dans une structure métallique par courants de Foucault en utilisant un réseau de bobines embarqué. Le principe à la base de l'invention est d'analyser les signaux issus des bobines par rapport à un effet de bord.

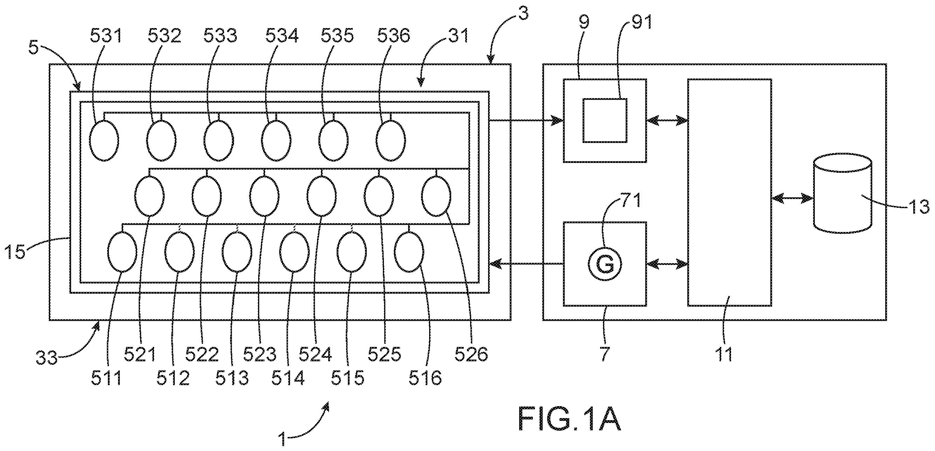

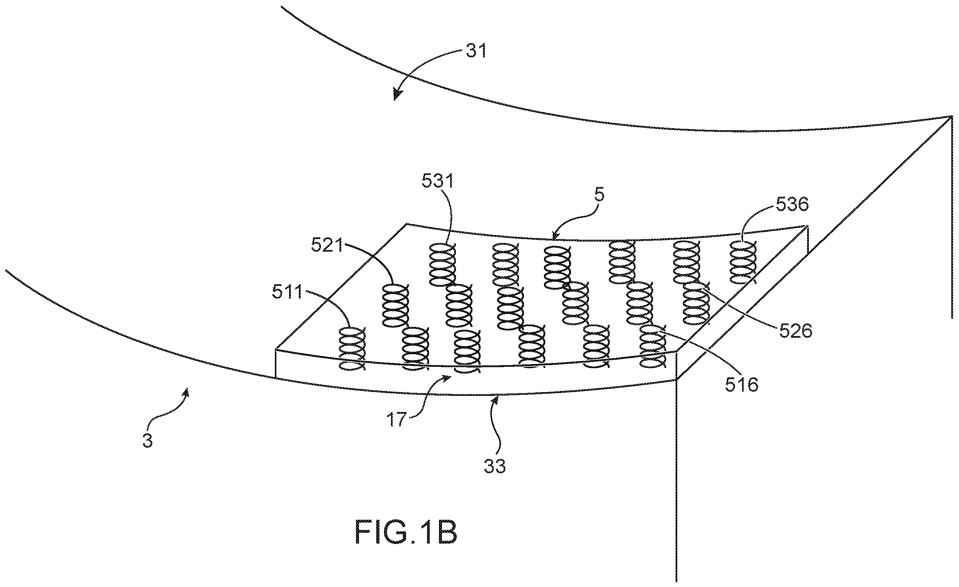

Les Figs. 1A et 1B illustrent de manière schématique un dispositif pouvant être utilisé pour réaliser le procédé de contrôle non destructif par courants de Foucault pour détecter des défauts dans une structure métallique d'un aéronef, selon l'invention.

Le dispositif 1 comporte, un réseau 5 de bobines, des moyens d'activation 7 pour activer les bobines, des moyens de mesure 9 pour mesurer des signaux électriques représentatifs des courants de Foucault, des moyens de calcul ou de traitement de données 11 pour traiter et analyser les signaux électriques, et des moyens de mémoire 13 pour enregistrer des données ou des instructions de code d'un programme d'ordinateur.

Le réseau 5 de bobines est constitué d'une pluralité de bobines 511-536 connectées en parallèle, pour pouvoir être traitées individuellement comme une pluralité de capteurs par courants de Foucault. On notera que les bobines 511-536 peuvent être de forme plane ou volumique selon l'épaisseur, l'encombrement ou d'autres facteurs de la structure 3 à contrôler. A titre d'exemple, chaque bobine peut avoir un diamètre d'environ 0,5 mm à 1 mm, et une hauteur d'environ 1 mm à 5 mm. Ainsi, le diamètre des bobines 511-536 peut être adapté au plus petit défaut à détecter, usuellement de l'ordre de 1 mm, et permet même de détecter des fissures en dessous de 1 mm. De plus, selon la hauteur des bobines 511-536, le dispositif 1 peut détecter des défauts à plusieurs niveaux de profondeur dans la structure 3. Ceci est particulièrement avantageux dans les assemblages qui ne présentent aucun accès direct à la peau de la structure.

Le réseau 5 de bobines est disposé de manière à couvrir toute la surface 31 de la structure 3 à inspecter. On notera que le réseau 5 de bobines comporte un cadre 15 ou écran électromagnétique pour l'isoler de son environnent tout en permettant pour chaque bobine, une détection individuelle assez étendue pour éviter l'existence de zones mortes entre les bobines 511-536. Ainsi, le réseau 5 de bobines peut diagnostiquer de manière continue toute la surface limitée par le cadre 15.

Avantageusement, le réseau 5 de bobines est maintenu sur la surface 31 à inspecter par un matériau flexible 17 ayant un pouvoir adhérant, de type mastic de remplissage donc non agressif pour la structure à contrôler, et résistant à des liquides agressifs comme par exemple du kérosène. On utilise le matériau flexible 17 pour assembler chacune des bobines à la surface 31 de la structure. Ce matériau flexible 17 permet d'ajuster et de maintenir le réseau 5 de bobines en contact sur une surface 31 de toute forme géométrique (par exemple, plane, concave, ou convexe). Avantageusement, le matériau flexible 17 est utilisé pour couvrir le réseau 5 de bobines afin de le figer et de le protéger contre tout produit agressif.

Après la fixation du réseau 5 sur la surface 31 de la structure des bobines, on active les bobines et on mesure leurs signaux électriques.

En effet, les moyens d'activation 7 comprennent un générateur 71 de courant variable par exemple, de type sinusoïdal pour activer individuellement les bobines 511-536. Le générateur 71 alimente les bobines 511-536 avec une fréquence d'excitation qui peut être choisie en fonction de paramètres liés au matériau de la structure 3 comme par exemple, sa conductivité électrique, sa perméabilité magnétique, ainsi que la forme géométrique et l'épaisseur de la structure 3, etc.

Les moyens de mesure 9 comprennent des moyens d'amplification, de filtrage, et des détecteurs des composantes actives et réactives des signaux (non représentés), ainsi que des moyens de visualisation 91 pour par exemple, visualiser l'amplitude et la phase des signaux ou encore les composantes actives et réactives dans le plan complexe. Les moyens de mesure 9 peuvent éventuellement, comporter des moyens d'équilibrage automatiques.

Conformément à l'invention, le procédé comporte une évaluation dans le temps d'une variation du signal électrique de chacune des bobines 511-536 en prenant comme référence un effet de bord correspondant à un signal électrique spécifique issu d'au moins une bobine 511-516 installée en bordure 33 de la surface 31. Le niveau de ladite variation étant indicatif de la présence des défauts dans la structure.

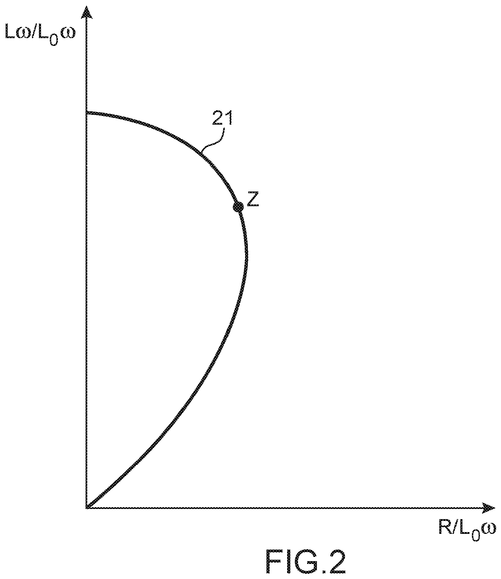

En effet, les moyens de traitement 11 sont configurés pour déterminer ou évaluer cette variation dans le temps du signal électrique. On notera que le signal électrique de chaque bobine peut être représenté dans le plan complexe ou plus précisément, plan d'impédance (voir Figs. 2 à 4C) de sorte que le niveau de variation du signal électrique soit indicatif de la présence ou absence de défauts dans la structure 3. Ainsi, on peut détecter les éventuels défauts dans la structure 3 en analysant par exemple, l'évolution dans le temps de l'amplitude du signal ou l'impédance de chaque bobine par rapport à l'effet de bord.

On notera que l'effet de bord est un repère relatif qui évolue avec l'évolution et le vieillissement de la structure 3 et par conséquent, un signal déterminé par rapport à ce repère reste invariant vis-à-vis des facteurs extérieurs. En effet, s'il y a un changement général dû au vieillissement ou durcissement de la matière, à la présence d'un champ électromagnétique extérieur, à la surchauffe de la structure, ou à un tout autre effet extrinsèque, la réponse de la matière change en conséquence. Mais, ce changement affecte à la fois et quasiment de la même manière tous les signaux des bobines 511-536 et par conséquent, en déterminant les signaux par rapport à l'effet de bord, tous ces phénomènes de vieillissement de la matière ou des facteurs extrinsèques n'auront pas d'impact sur la détection des fissures ou défauts et on évite ainsi les fausses alarmes.

De plus, en prenant comme référence l'effet de bord, l'initialisation du réseau 5 peut être réalisée directement sur la structure 3 et il n'est plus nécessaire de faire « le zéro » des bobines dans l'air. Ainsi, les moyens de traitement 11 peuvent être configurés pour calibrer (initialiser ou réinitialiser) le réseau 5 de bobines à des intervalles déterminés dans le temps (par exemple, avant chaque inspection) tout en ayant ce dernier fixé sur la surface 31 de la structure 3. L'enregistrement de ces calibrages permet d'analyser l'évolution sur la surface de la structure 3.

Le calibrage permet d'analyser la conformité des signaux des bobines 511-536 tout en ayant le réseau 5 installé en permanence sur la structure 3 permettant ainsi de comparer les signaux à des moments différents dans le temps et par conséquent, de diagnostiquer l'opérationnalité de chaque bobine de manière efficace et robuste. En particulier, ceci permet d'éviter les risques de fausses interprétations du signal dues à un mauvais contact. Les moyens de traitement 11 peuvent être configurés pour écarter le signal de toute bobine présentant une anomalie permettant par conséquent, d'utiliser le dispositif 1 de contrôle même si une ou plusieurs bobines sont défectueuses.

Selon un mode de réalisation particulier, les moyens de traitement 11 peuvent être configurés pour subdiviser ou définir des sous-ensembles de bobines parmi les bobines 511-536 du réseau 5 de sorte que chaque sous-ensemble comprend au moins une bobine de bord parmi les bobines 511-516 installées en bordure 33 de la surface 31. Chaque sous-ensemble de bobines peut par exemple, correspondre à un alignement de bobines sensiblement perpendiculaire à la bordure de la surface.

A titre d'exemple, le réseau 5 peut être subdivisé en les sous ensembles suivants : (511, 521, 531), (512, 522, 532),..., (516, 526, 536). La première bobine 511 de bord du premier sous ensemble (511, 521, 531) peut être utilisée comme référence pour déterminer les signaux ou impédances des bobines 511, 521, 531 appartenant à ce premier sous-ensemble. La deuxième bobine 512 de bord peut être utilisée comme référence pour le deuxième sous-ensemble, et ainsi de suite. En effet, pour chaque sous-ensemble, les moyens de traitement 11 déterminent le signal électrique de chacune de ses bobines en prenant comme référence l'effet de bord correspondant au signal spécifique issu de la bobine de bord appartenant audit sous-ensemble. Ceci permet aux moyens de traitement 11 de comparer pour chaque sous-ensemble, l'évolution du signal électrique de chacune de ses bobines à des moments différents dans le temps.

On notera que chacun des sous-ensembles de bobines peuvent comporter deux bobines de bord ou plus en les regroupant par exemple de manière bidimensionnelle. De plus, les sous-ensembles peuvent être choisis non disjoints en ayant des bobines en commun.

Par ailleurs, selon une première variante, les sous-ensembles de bobines peuvent être simultanément activés par les moyens d'activation 7. Selon une seconde variante, ils peuvent être activés de manière séquentielle (un sous-ensemble à chaque séquence) pour simuler un balayage mécanique de la surface 31 à inspecter.

La Fig. 2 représente un exemple d'un diagramme usuel de l'impédance d'une bobine dans le plan d'impédance. Chaque point sur la courbe 21 représente une impédance normalisée Z définie par une composante active normalisée R/L₀ω et une composante réactive normalisée Lω/L₀ω (R étant la résistance de la bobine, L étant l'inductance de la bobine, L₀ étant l'inductance de la bobine avant l'installation, et ω étant la pulsation).

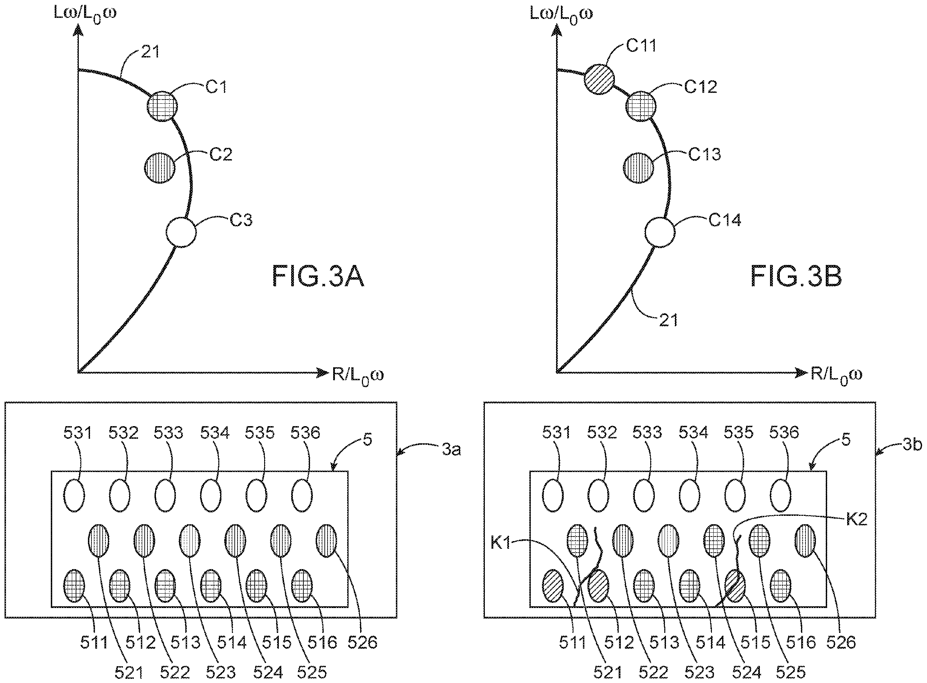

La Fig. 3A représente la distribution des impédances normalisées Z issues des bobines en fonction de leur position sur une structure 3a initiale ou de référence ne présentant pas de défaut. Chaque petit cercle sur la courbe 21 représente l'impédance d'une bobine qui dépend en particulier de l'éloignement de la bobine par rapport au bord 33 de la structure 3. Les bobines 511-516 installées en bordure 33 de la surface 3 présentent les impédances les plus élevées et celles 531-536 qui sont les plus éloignées du bord 33 présentent les impédances les moins élevées.

Plus particulièrement, selon cet exemple, les petits cercles C1, C2, et C3 représentent, en partant du bord 33, les bobines 511-516 sur le premier rang, les bobines 521-526 sur le deuxième rang, et les bobines 531-536 sur le troisième rang respectivement. L'effet de bord agit sur chaque bobine en fonction de sa distance du bord 33. En particulier, le bord 33 peut être considéré comme une crique de section infinie qui empêche les courants de Foucault de circuler. Réciproquement, une crique peut être considérée comme un bord et par conséquent, une bobine au voisinage d'une crique présente une impédance équivalente ou plutôt comparable à celle d'une bobine installée sur la bordure.

Ainsi, la détection et le suivi de la progression d'une crique peuvent être réalisés par la mesure et la comparaison du signal électrique de chacune des bobines 511-536, par rapport à celles qui sont en bordure 511-516. La progression d'une crique peut être lue par l'apparition d'un signal comparable à celui d'une bobine en bordure et donc peut être classifiée dans une catégorie de « signal de crique ».

La Fig. 3B représente la distribution des signaux issus des bobines en fonction de leur position sur une structure 3b présentant des défauts.

A titre d'exemple, les bobines du bord 511, 512 et 515 qui ont des criques K1 et K2 dans leurs voisinages, présentent une impédance (représentée par le petit cercle C11) plus élevée que celle (représentée par le petit cercle C12) des bobines 513 et 514 qui n'ont pas de criques dans leur voisinage immédiat. De même, les bobines du deuxième rang 521, 524 et 525 présentent une impédance (représentée par le petit cercle C12) plus élevée que celle (représentée par le petit cercle C13) des bobines 522 et 523. En outre, l'impédance des bobines 531-536 du troisième rang est représentée par le petit cercle C14.

Comme indiqué précédemment, une crique ou fissure empêche les courants de Foucault de circuler et par conséquent, l'impédance d'une bobine au voisinage immédiat de la crique va augmenter. De plus, l'effet d'une crique se conjugue à l'effet de bord et par conséquent, les signaux issus par exemple, de deux bobines équidistantes du bord ne peuvent être différenciés que par l'existence d'une crique dans le voisinage immédiat de l'une ou l'autre de ces deux bobines.

D'une manière pratique, la variation dans le temps des signaux électriques issus des bobines peut être analysée en comparant ces signaux à des seuils de détection qui permettent un diagnostic direct des défauts ou criques dans la structure 3.

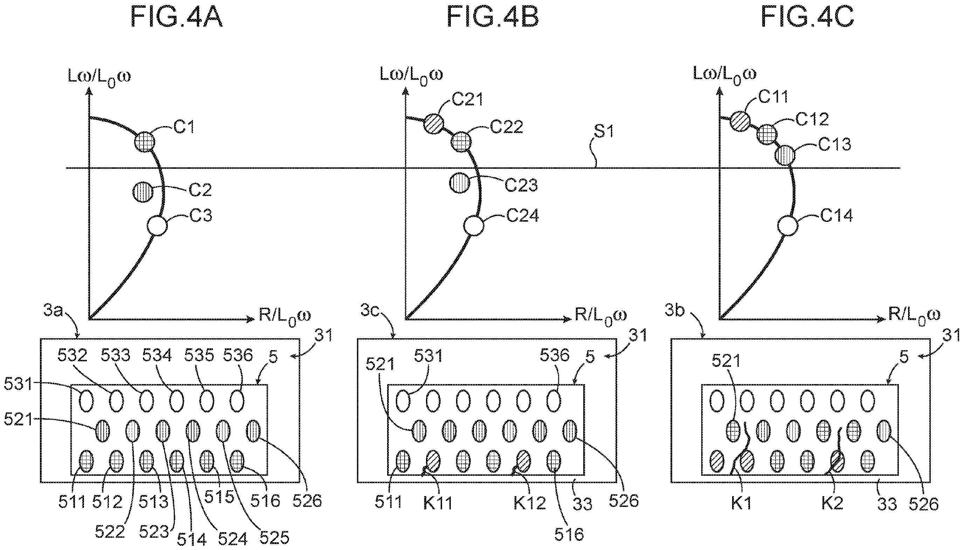

En effet, les Figs. 4A-4C représentent un seuil de détection S1 dans le plan d'impédance qui peut être utilisé pour diagnostiquer la présence des défauts dans la structure 3. Selon cet exemple, le seuil S1 est utilisé pour le groupe de bobines 521-526 installées au deuxième rang.

Plus généralement, les moyens de traitement 11 sont avantageusement configurés pour analyser les signaux électriques issus des bobines par rapport à des seuils de détection déterminés en fonction des positions des bobines sur la surface 31. De la sorte, un seuil de détection peut correspondre à chaque bobine ou à chaque groupe de bobines équidistantes du bord 33. Autrement dit, les seuils de détection dépendent de la distribution spatiale des bobines et en particulier, de leur éloignement par rapport au bord 33 de la surface 31. Par exemple, les bobines en bordure sont traitées avec un seuil différent puisque dès le départ elles ont des niveaux d'impédance plus importants dus à l'effet de bord.

De manière générale, les seuils de détection permettent de constater si les niveaux de signaux électriques des bobines sont acceptables ou pas pour la structure 3.

La Fig. 4A illustre le cas d'une structure 3a sans défauts et représente le seuil de détection S1 correspondant aux bobines 521-526 installées dans le deuxième rang. Selon cet exemple, les signaux (représentés par le petit cercle C2) issus de ces bobines 521-526 sont bien entendu, en dessous du seuil de détection S1 correspondant.

La Fig. 4B illustre le cas où la structure 3c comporte quelques petites fissures K11, K12 considérées comme acceptables car les signaux (représentés par le petit cercle C23) issus des bobines 521-526 sont toujours en dessous du seuil de détection S1 correspondant même s'ils se rapprochent de ce seuil.

En revanche, la Fig. 4C illustre le cas où les fissures K1, K2 dans la structure 3b sont plus importantes avec des signaux (représentés par le petit cercle C13) issus des bobines 521-526, qui dépassent le seuil de détection S1 correspondant. Dans ce dernier cas, une alerte est signalée.

En outre, les moyens de traitement 11 sont configurés pour analyser la répartition spatiale des bobines qui présentent des signaux électriques dont les niveaux sont au-delà des seuils de détection. Cette analyse permet de vérifier si ces niveaux dépassent un autre seuil d'acceptabilité s'exprimant en longueur de fissure afin de détecter les longueurs de fissures ou criques à ne pas dépasser.

Par ailleurs, les moyens de traitement 11 sont aussi configurés pour comparer entre eux les signaux spécifiques des bobines 511-516 installées au bord 33 de la surface 31. Cette analyse en parallèle de toutes les bobines 511-516 qui sont alignées en bordure de la structure 3 permet de croiser les résultats précédents pour être encore plus sûr de ne pas avoir un faux diagnostic. En effet, ceci permet de vérifier avec précision si l'alerte ou la détection de défaut par l'analyse de la variation des signaux électriques des bobines correspond bien à une fissure ou un défaut et non pas à un changement local des propriétés de la matière dû par exemple à un champ thermique, un champ électromagnétique, un décollement des bobines de la surface, ou un tout autre effet extérieur. En particulier, si les niveaux d'amplitudes ou d'impédance d'une grande partie des bobines 511-516 de bord indiquent la présence d'un défaut, on peut déduire que la cause est vraisemblablement autre chose qu'une fissure de la structure 3. En effet, une fissure de bord n'est en général détectée que par une, voire deux, bobines de bord et par conséquent, un défaut détecté par un grand nombre de bobines de bord peut être considéré comme suspect sachant qu'il est extrêmement improbable d'avoir autant de fissures que de bobines.

En outre, les moyens de traitement 11 sont avantageusement configurés pour déterminer une cartographie spatiale selon un mode de rapport de type C-scan donnant les positions respectives des bobines détectant des défauts ou criques. Cette cartographie spatiale peut être réalisée en établissant une correspondance entre les niveaux de signaux électriques des bobines par rapport à l'effet de bord dans le plan d'impédance et la répartition spatiale de ces bobines sur la surface 31 de la structure 3. Les moyens de visualisation 91 peuvent alors visualiser en direct cette cartographie spatiale qui permet de déterminer les positions des criques ou défauts dans la structure. A titre d'exemple, les bobines 511-536 représentées sur les Figs 4A-4C et les signaux correspondants (C1, C2, C3, C21 ; C22, C23, C24 ; C11, C12, C13, et C14) sont hachurées de la même manière. On notera qu'afin de faciliter le diagnostic, les bobines peuvent être affichées sur les moyens de visualisation 91 selon des couleurs différentes correspondant à des niveaux de signaux différents.

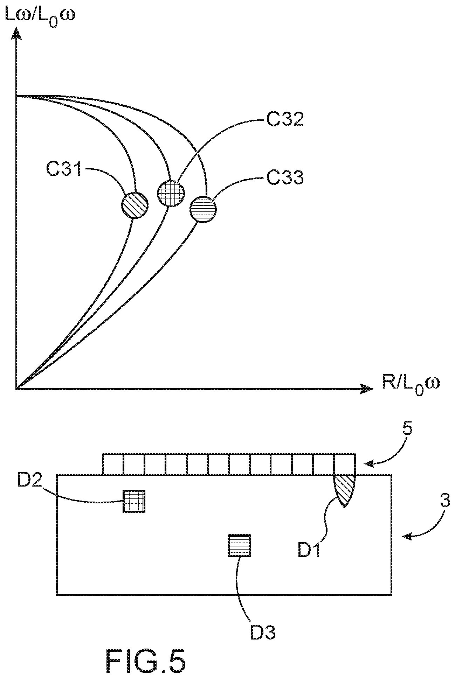

On notera que dans le cas où le réseau comporte des bobines volumiques (par exemple, des bobines dont la hauteur est de l'ordre de 5 mm), on peut exploiter les composantes active et réactive de l'impédance dans le plan complexe pour détecter des défauts en profondeur, comme illustré sur la Fig. 5.

Ainsi, les moyens de traitement 11 sont configurés pour déterminer les phases des signaux qui ont déjà été définies par rapport à l'effet de bord. Les moyens de traitement 11 analysent les déphasages des signaux par rapport à une phase de référence correspondant à des courants de Foucault surfaciques. En effet, les courants de Foucault surfaciques présentent une certaine phase qui peut être considérée comme une phase de référence, et plus on descend en profondeur dans la structure 3 plus la phase va être décalée par rapport à la phase de référence. En particulier, une profondeur standard est définie par un déphasage de 57° par rapport aux courants de Foucault surfaciques et donc un changement d'angle peut être utilisé pour diagnostiquer la position d'un défaut dans l'épaisseur de la structure 3. Ainsi, le déphasage des signaux donne une indication de la profondeur d'une fissure ou du niveau où se trouve un défaut enfui dans la structure 3. Ceci est particulièrement avantageux dans le cas d'une structure composée d'un empilement de plusieurs couches pour diagnostiquer des fissures qui peuvent par exemple, démarrer dans une couche intermédiaire.

L'exemple de la Fig. 5 représente une section de la structure 3 comportant un premier défaut surfacique D1, un deuxième défaut D2 en profondeur, et un troisième défaut D3 encore plus en profondeur. Les petits cercles C31, C32, et C33 représentent les signaux issus des bobines détectant les défauts D1, D2, et D3 respectivement. Les variations d'angles des signaux C31, C32, et C33 indiquent la profondeur des défauts dans la structure 3.

Par ailleurs, on notera que le dispositif 1 de contrôle selon l'invention peut être intégré dans un système de surveillance de santé de l'aéronef. Le diagnostic réalisé par le dispositif de contrôle peut être consulté à l'arrêt ou même en continu lors du fonctionnement des structures de l'aéronef. Ceci permet d'enrichir la surveillance de la santé de l'aéronef.

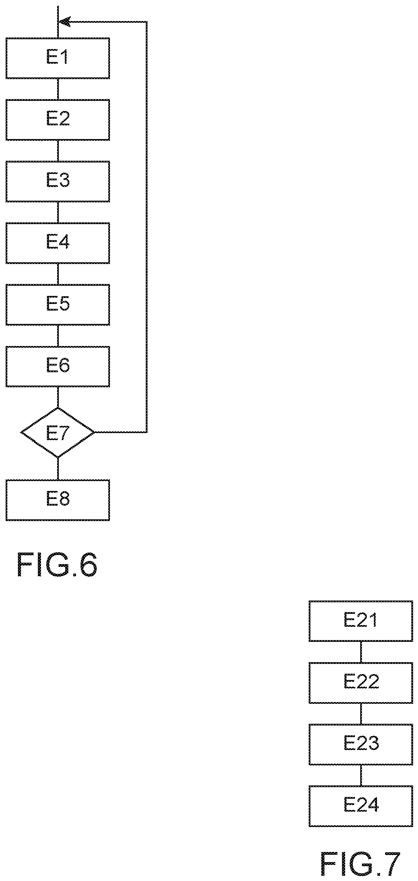

La Fig. 6 représente un organigramme illustrant les différentes étapes de l'installation du réseau 5 de bobines sur une structure 3 de l'aéronef selon un mode de réalisation particulier de l'invention.

A l'étape E1 un outil de moulage est installé sur la zone de la surface 31 qu'on veut couvrir.

A l'étape E2, on monte un réseau 5 constitué de petites bobines associées en parallèle dans l'outil de moulage et en contact avec la surface 31 à inspecter de la structure 3.

A l'étape E3, le matériau flexible 17 de remplissage (mastic) est coulé dans l'outil de moulage et au-dessus du réseau 5 de bobines afin de couvrir les bobines tout en les maintenant en contact avec la surface 31. Après la polymérisation du mastic, ce dernier permet aussi l'adhésion du réseau 5 des bobines sur la peau métallique (surface) de la structure 3.

A l'étape E4, les bobines sont individuellement activées par un générateur électrique variable.

A l'étape E5, les signaux électriques issus des bobines sont prélevés par les moyens de mesure 9.

A l'étape E6, les moyens de traitement 11 déterminent la répartition dans le plan d'impédance des signaux issus des bobines en prenant comme référence l'effet de bord.

A l'étape E7, les moyens de traitement 11 réalisent un diagnostic électronique ou auto-calibrage des bobines en analysant la conformité d'un seuil électronique de chacune des bobines. Plus particulièrement, on analyse les signaux issus des bobines par rapport à la géométrie de la structure. Si le décalage des signaux dans le plan d'impédance est homogène (autrement dit, si les bobines positionnées à égale distance du bord 33 présentent les mêmes niveaux d'impédance), alors on peut déduire que les bobines fonctionnent proprement. En revanche, si le décalage des signaux n'est pas homogène, alors on peut déduire, qu'il existe au moins une bobine dans le réseau qui a été endommagée pendant l'installation. Dans ce dernier cas, le réseau 5 est éventuellement enlevé pour être réparé ou remplacé et on recommence les étapes précédentes d'installation. On notera que cette analyse peut être complétée par un diagnostic basé sur la comparaison des seuils électroniques dans le temps pour une éventuelle détection de variation anormale du signal de la bobine due à une amorce de rupture d'un câble ou d'une connexion électrique. Si une bobine présente ce type d'anomalie, son signal sera automatiquement écarté.

A l'étape E8, les moyens de traitement 11 enregistrent dans les moyens de mémoire 13 des données de référence correspondant à une signature des signaux individuels des bobines formant le réseau 5 pour des comparaisons futures et diagnostic du bon fonctionnement dans le temps.

La Fig. 7 représente un organigramme illustrant les différentes étapes du procédé de détection de défaut selon un mode de réalisation particulier de l'invention.

A l'étape E21 les bobines 511-536 sont individuellement activées par le générateur électrique. Les bobines peuvent être activées simultanément ou selon un mode de balayage virtuel de la surface 31 par séquences d'un nombre déterminé de bobines comprenant au moins une bobine de bord à chaque séquence.

A l'étape E22, les moyens de traitement 11 enregistrent dans les moyens de mémoire 13 des données initiales correspondant à des signaux initiaux des bobines.

A l'étape E23, les moyens de traitement 11 comparent les données initiales aux données de référence pour déterminer la variation dans le temps du signal électrique de chacune des bobines en prenant l'effet de bord comme référence. Si pour une bobine donnée la variation dépasse une valeur déterminée, alors on peut déduire que la bobine détecte un défaut. Ceci peut être confirmé lorsqu'il existe deux bobines voisines ou plus qui indiquent aussi des variations supérieures à des valeurs déterminées.

A l'étape E24, les moyens de traitement 11 comparent entre eux les signaux des bobines installées au bord 33 de la surface 31. Ceci permet de croiser les résultats précédents pour vérifier que la détection correspond bien à une fissure ou un défaut et n'est pas une fausse alarme.

Par ailleurs, on notera que les moyens de mémoire 13 peuvent comprendre un programme d'ordinateur comportant des instructions de code adaptées à la mise en oeuvre du procédé selon l'invention telle que décrite ci-dessus lorsqu'il est exécuté par les moyens de traitement 11.

## Revendications

1. Procédé de contrôle non destructif par courants de Foucault pour détecter des défauts dans une structure (3) métallique au moyen d'un réseau (5) de bobines fixé sur une surface (31) de ladite structure (3), comprenant une activation des bobines, et une mesure des signaux électriques représentatifs des courants de Foucault, **caractérisé en ce que** ledit procédé comporte en outre une évaluation dans le temps d'une variation du signal électrique de chacune des bobines (511-536) en prenant comme référence un effet de bord correspondant à un signal électrique spécifique issu d'au moins une bobine installée en bordure de la surface, le niveau de ladite variation étant indicatif de la présence des défauts dans la structure.

2. Procédé de contrôle selon la revendication 1, comportant une étape pour comparer entre eux les signaux électriques spécifiques des bobines (511-516) installées en bordure (33) de la surface (31).

3. Procédé de contrôle selon la revendication 1 ou 2, comportant les étapes suivantes :
- déterminer une cartographie spatiale en établissant une correspondance entre les niveaux de signaux électriques des bobines par rapport à l'effet de bord dans le plan d'impédance et la répartition spatiale desdites bobines sur ladite surface, et
- visualiser ladite cartographie spatiale.

4. Procédé de contrôle selon l'une quelconque des revendications précédentes, comportant les étapes suivantes :
- assembler chacune des bobines dudit réseau (5) de bobines à la surface (31) de ladite structure au moyen d'un matériau flexible (17) ayant un pouvoir adhérant,
- couvrir le réseau (5) de bobines au moyen dudit matériau flexible (17), et
- maintenir le réseau (5) de bobines en contact sur ladite surface au moyen dudit matériau flexible (17).

5. Procédé de contrôle selon l'une quelconque des revendications précédentes, comportant une analyse des signaux électriques issus des bobines par rapport à des seuils de détection (S1) déterminés en fonction des positions desdites bobines sur la surface (31).

6. Procédé de contrôle selon l'une quelconque des revendications précédentes, comportant une calibration dudit réseau (5) de bobines à des intervalles déterminés dans le temps pour analyser l'évolution sur la surface (31) de ladite structure (3).

7. Procédé de contrôle selon l'une quelconque des revendications précédentes, comportant un écartement du signal électrique de toute bobine présentant une anomalie.

8. Procédé de contrôle selon l'une quelconque des revendications précédentes, comportant les étapes suivantes :
- déterminer les phases desdits signaux électriques issus des bobines en prenant comme référence l'effet de bord, et
- analyser les déphasages desdits signaux électriques par rapport à une phase de référence correspondant à des courants de Foucault surfaciques.

9. Aéronef comportant une structure métallique et un dispositif de contrôle de la structure mettant en oeuvre le procédé selon l'une quelconque des revendications 1 à 8.

## Patentansprüche

1. Zerstörungsfreies Prüfverfahren durch Foucault-Ströme zur Erfassung von Fehlern in einer metallischen Struktur (3) mittels eines an einer Fläche (31) der Struktur (3) befestigten Netzes (5) von Spulen, das eine Aktivierung der Spulen und eine Messung der für die Foucault-Ströme repräsentativen elektrischen Signale enthält, **dadurch gekennzeichnet, dass** das Verfahren außerdem eine zeitliche Bewertung einer Änderung des elektrischen Signals jeder der Spulen (511-536) aufweist, indem als Bezug eine Randwirkung genommen wird, die einem speziellen elektrischen Signal entspricht, das von mindestens einer am Rand der Fläche eingebauten Spule stammt, wobei der Pegel der Änderung das Vorhandensein der Fehler in der Struktur anzeigt.

2. Prüfverfahren nach Anspruch 1, das einen Schritt aufweist, um die speziellen elektrischen Signale der am Rand (33) der Fläche (31) eingebauten Spulen (511-516) miteinander zu vergleichen.

3. Prüfverfahren nach Anspruch 1 oder 2, das die folgenden Schritte aufweist:
- Bestimmen einer räumlichen Kartierung, indem eine Entsprechung zwischen den Pegeln elektrischer Signale der Spulen bezüglich der Randwirkung in der Impedanzebene und der räumlichen Verteilung der Spulen auf der Fläche erstellt wird, und
- Anzeige der räumlichen Kartierung.

4. Prüfverfahren nach einem der vorhergehenden Ansprüche, das die folgenden Schritte aufweist:
- Zusammenbau jeder der Spulen des Netzes (5) von Spulen an der Oberfläche (31) der Struktur mittels eines biegsamen Materials (17), das ein Haftvermögen hat,
- Bedecken des Netzes (5) von Spulen mittels des biegsamen Materials (17), und
- Halt des Netzes (5) von Spulen in Kontakt an der Oberfläche mittels des biegsamen Materials (17).

5. Prüfverfahren nach einem der vorhergehenden Ansprüche, das eine Analyse der von den Spulen stammenden elektrischen Signale bezüglich von Erfassungsschwellen (S1) aufweist, die abhängig von den Stellungen der Spulen an der Oberfläche (31) bestimmt werden.

6. Prüfverfahren nach einem der vorhergehenden Ansprüche, das eine Kalibrierung des Netzes (5) von Spulen in bestimmten zeitlichen Abständen aufweist, um die Entwicklung an der Oberfläche (31) der Struktur (3) zu analysieren.

7. Prüfverfahren nach einem der vorhergehenden Ansprüche, das einen Abweichung des elektrischen Signals jeder Spule aufweist, die eine Anomalie hat.

8. Prüfverfahren nach einem der vorhergehenden Ansprüche, das die folgenden Schritte aufweist:
- Bestimmen der Phasen der von den Spulen stammenden elektrischen Signale, indem die Randwirkung als Bezug genommen wird, und
- Analyse der Phasenverschiebungen der elektrischen Signale bezüglich einer Bezugsphase, die flächenbezogenen Foucault-Strömen entspricht.

9. Luftfahrzeug, das eine metallische Struktur und eine Prüfvorrichtung der Struktur aufweist, die das Prüfverfahren nach einem der Ansprüche 1 bis 8 anwendet.

## Claims

1. A nondestructive inspection method using eddy currents for detecting flaws in a metal structure (3) by means of an array (5) of coils attached to a surface (31) of said structure (3), comprising activation of the coils, and measurement of the electrical signals representative of the eddy currents, **characterized in that** said method also comprises an evaluation over time of a variation in the electrical signal of each of the coils (511-536), taking as a reference an edge effect corresponding to a specific electrical signal emanating from at least one coil installed at the edge of the surface, the level of said variation being indicative of the presence of flaws in the structure.

2. An inspection method according to Claim 1, comprising a step for comparing to one another the specific electrical signals of the coils (511-516) installed at the edge (33) of the surface (31).

3. An inspection method according to Claim 1 or 2, comprising the following steps:
- determining a spatial mapping by establishing a correspondence between the levels of the electrical signals of the coils compared to the edge effect in the impedance plane and the spatial distribution of said coils on said surface, and
- displaying said spatial mapping.

4. An inspection method according to any one of the foregoing claims, comprising the following steps:
- assembling each of the coils of said array (5) of coils onto the surface (31) of said structure by means of a flexible material (17) possessing adhesion,
- covering the array (5) of coils by means of the flexible material (17), and
- holding the array (5) in contact on said surface by means of said flexible material (17).

5. An inspection method according to any one of the foregoing claims, including an analysis of the electrical signals emanating from the coils by comparison with detection thresholds (S1) determined as a function of the positions of said coils on the surface (31).

6. An inspection method according to any one of the foregoing claims, including a calibration of said array (5) of coils at predetermined intervals in time to analyze the change on the surface (31) of said structure (3).

7. An inspection method according to any one of the foregoing claims, including exclusion of the electrical signal of any coil showing an anomaly.

8. An inspection method according to any one of the foregoing claims, comprising the following steps:
- determining the phases of said electrical signals emanating from the coils, taking the edge effect as a reference, and
- analyzing the phase shifts of said electrical signals with respect to a reference phase corresponding to surface eddy currents.

9. An aircraft comprising a metal structure and an inspection device for the structure implementing the method according to any one of Claims 1 through 8.
